# EUROPÄISCHE PATENTSCHRIFT

(11) **EP 0 437 718 B1**
(45) Veröffentlichungstag und Bekanntmachung des Hinweises auf die Patenterteilung: **25.08.1993**
(21) Anmeldenummer: 90123315.5
(22) Anmeldetag: 05.12.1990
(51) Int. Cl.: C02F 3/20, F16L 1/24

(54) **Schwimmbelüfter**
Floating aerator
Aérateur flottant

(30) Priorität: 17.01.1990 DE 4001201
(43) Veröffentlichungstag der Anmeldung: 24.07.1991
(73) Patentinhaber: Von Nordenskjöld, Reinhart, Dr.-Ing., D-85658 Egmating-Münster (DE)
(72) Erfinder: Von Nordenskjöld, Reinhart, Dr.-Ing., D-85658 Egmating-Münster (DE)
(74) Vertreter: Grünecker, Kinkeldey, Stockmair & Schwanhäusser Anwaltssozietät

(56) Entgegenhaltungen:
- DE-A- 2 004 007
- DE-A- 2 834 889
- DE-A- 2 836 452
- DE-A- 3 227 672
- DE-U- 8 811 738
- US-A- 4 488 508

## Beschreibung

Die Erfindung betrifft einen Schwimmbelüfter für die Einleitung von Luft in ein Gewässer, insbesondere in eine Belebtschlammanlage, mit wenigstens einer an der Wasseroberfläche verlaufenden Luftversorgungsleitung und mit wenigstens einem Bodenbelüfter, der über einen an der Luftversorgungsleitung angeordneten Schwimmer sowie wenigstens eine von der Luftversorgungsleitung abzweigende Verbindungsleitung hängend unterhalb der Wasseroberfläche angeordnet ist und dort Luft in das Gewässer einzuleiten.

Ein Schwimmbelüfter dieser Art ist in den beiden auf denselben Anmelder zurückgehenden deutschen Offenlegungsschriften 28 34 899 sowie 32 27 672 beschrieben worden. Die Besonderheit der Lufteinleitung durch derartige Schwimmbelüfter in Gewässer, insbesondere zur Klärung und zum biologischen Reinigen von Gewässern in sogenannten Belebtschlammanlagen, besteht darin, daß mit sehr geringem Energieeintrag eine effektive Reinigung der Gewässer möglich ist. Die Schwimmbelüfter umfassen Leitungen, die über den zu belüftenden Teil der Anlagen beabstandet zueinander derart angebracht werden, daß die auf der Wasseroberfläche sichtbaren Leitungen eine horizontale, hin- und hergehende Wanderbewegung ausführen. Von diesen Leitungen zweigen Verbindungsleitungen zu Bodenbelüftern ab, die unterhalb der Wasseroberfläche Luft in das Gewässer eintragen. Wenn in diesem Text von Luft gesprochen wird, so umfaßt dies allgemein Gase, z.B. auch O₂ oder auch Gasmischungen, die für spezielle Anwendungsfälle einzutragen sind.

Aufgrund der hin und her gehenden Bewegung der Luftversorgungsleitungen wandern auch die Bodenbelüfter unterhalb der Wasseroberfläche hin und her und überstreichen somit den gesamten Bereich des Volumens, was einen sehr gleichmäßigen Sauerstoffeintrag zur Folge hat. Die Wanderbewegung dieser auch als Belüfterketten bezeichneten Schwimmbelüfter ergibt sich durch den Lufteintrag über die Bodenbelüfter von selbst, so daß kein Fremdantrieb erforderlich ist. Für weitere Einzelheiten kann diesbezüglich auf die beiden obengenannten Offenlegungsschriften verwiesen werden.

Bei den bekannten Lösungen bestehen die Luftversorgungsleitungen aus Schlauchstücken, die in den Bereichen, in denen die Zuleitungen zu den Bodenbelüftern in das Wasser abzweigen, durch Rohrstücke und an den Rohrstücken angeordnete Schwimmkörper unterbrochen sind. Die einzelnen Schlauchstücke werden in bekannter Weise an den Rohrstücken mittels Schlauchschellen oder dgl. befestigt. Die Rohrstücke sind T-förmig ausgebildet, wobei der vertikale Teil als Anschlußstutzen für die zu den Bodenbelüftern führende Verbindungsleitung dient.

Dieses System hat sich zwar soweit es die hin- und hergehende Bewegung der Schwimmbelüfter angeht und soweit es die damit erzielbare biologische Reinigungswirkung angeht, als prinzipiell funktionstüchtig erwiesen, es hat sich jedoch herausgestellt, daß die Art der Schwimmeranordnung nachteilig ist. Dabei muß berücksichtigt werden, daß die Schwimmbelüfter häufig eine große Länge, beispielsweise 30 bis 50m aufweisen müssen, um bei einem Becken von einer Seite zur anderen Seite verlaufen zu können. Dadurch wirken nicht nur bei der Montage, sondern auch im Betrieb beträchtliche Kräfte auf die Verbindungsstellen zwischen den schlauchförmigen Abschnitten der Luftversorgungsleitung und den Rohrstücken, um die herum die Schwimmer als Schaumstoffkörper gespritzt sind. Dies führt häufig zu Beschädigungen an den Anschlußstellen, so daß die Leitungen dort undicht und schließlich auch unbrauchbar werden, indem sie z.B. ganz auseinandergerissen werden. Dadurch kommt die gesamte entsprechende Schwimmbelüfterkette zum Stillstand, was schließlich den Betrieb und die Biologieder gesamten Anlage in Frage stellt und nicht selten in nicht mehr reparierbarer Weise völlig zum Erliegen bringt, so daß der Belebtschlamm in langwierigem Prozeß wieder neu aufgebaut werden muß. Die Reparatur dieser Stellen ist mühsam, weil hierzu entweder das Wasser des Beckens abgelassen werden muß oder weil mit Hilfe von Schlauchbooten oder dgl. an die entsprechenden Stellen herangefahren werden muß, um dann dort die Reparatur vor Ort durchzuführen. Ganz besonders nachteilig wirkt sich dabei auch der beim Auseinandergehen in die Leitungen eintretende Schlamm aus, der dort zu Verstopfungen der Leitungen führen kann.

Ein weiterer Nachteil liegt darin, daß jedesmal bei Reparaturen eine Verletzungsgefahr für die Person besteht, die die Reparatur durchführt. Insbesondere kommt es häufig beim Festziehen der Schlauchschellen an den Verbindungsstellein durch Abrutschen des Schraubenziehers oder auch an den Kanten der überstehenden Laschen der Schlauchschellen zu kleineren Verletzungen, was insbesondere deshalb gefährlich ist, weil sich in derartigen Anlagen ein Unzahl von schädlichen Bakterien befinden, die zu Blutvergiftungen oder dgl. bei den Monteuren führen kann.

Des weiteren ist die Ausbildung der Schwimmer als um ein rohrförmiges T-Stück herumgespritzter Schaumstoffkörper der ganzseitig mit Teer oder dgl. verkleidet ist, aufwendig.

Es ist daher Aufgabe der Erfindung, einen gattungsgemäßen Schwimmbelüfter insbesondere im Hinblick auf die Herstellungskosten, aber auch auf die Wartung, Reparatur und auf die Funktionssicherheit weiter zu verbessern.

Gelöst wird diese Aufgabe bei einem Schwimmbelüfter der eingangs genannten Art dadurch, daß die Luftversorgungsleitung als durchgehende Schlauchleitung ausgebildet ist und daß der Schwimmer wenigstens zwei, Auftriebskörper bildende Formteile umfaßt, die an der Schlauchleitung angeordnet und miteinander verbunden sind und die die Schlauchleitung in einer von den Formteilen gebildeten Durchgangsöffnung ganz oder teilweise umschließen.

Gemäß dem ersten kennzeichnenden Merkmal ist die Luftversorgungsleitung als durchgehende Schlauchleitung ausgebildet. Dies bringt enorme Fertigungsvorteile, da nicht mehr je nach Einsatzort entsprechende Schlauchstücke in geeigneter Länge zurechtgeschnitten werden müssen. Es braucht lediglich eine bestimmte für den Einsatzort benötigte Schlauchlänge bereitgestellt werden. Die Schwimmer können dann an beliebigen Stellen angeordnet werden. Bezüglich der Stabilität ergeben sich hieraus ebenfalls beträchtliche Vorteile, da ein Ausreißen oder ein Undichtwerden einer durchgehenden Schlauchleitung praktisch nicht auftreten kann. Die Verbindungsstellen zu rohrförmigen Teilstücken entfallen somit ganz. Damit entfallen auch die damit verbundenen Montageschwierigkeiten und auch die Verletzungsgefahr für die Monteure.

Desweiteren wird mit der Ausbildung der Schwimmer in der Art von Auftriebskörper bildenden Formteilen, die z. B. seitlich auf die Luftversorgungsleitung aufgesetzt und miteinander verbunden werden, eine äußerst einfache Montage der Schwimmer an beliebigen Stellen der Schlauchleitung ermöglicht. Die Montage der Schwimmer kann einfach vor Ort vorgenommen weren. Zur Montage brauchen lediglich die beiden Formteile seitlich auf die Schlauchleitung aufgesetzt und dann miteinander beispielsweise verrastet, verschraubt oder dgl. zu werden. Die von den Formteilen gebildete Durchgangsöffnung wird von der Schlauchleitung durchsetzt und kann in ihren Dimensionen so auf die Schlauchleitung abgestimmt werden, daß eine reibschlüssige Verbindung zwischen der schlauchförmigen Verbindungsleitung und den Schwimmern erhalten wird. Die beiden Formteile können getrennt voneinander hergestellt werden. Es ist aber auch im Rahmen der Erfindung möglich, die Formhälften an einer Kante zusammenhängend auszubilden, so daß durch Aufklappen dann die Schlauchleitung aufgenommen werden kann. Schließlich wäre es auch denkbar, die Formteile vorab so miteinander zu verbinden, daß quasi ein Schwimmkörper entsteht, durch den zu Montage die Schlauchleitung hindurchgefädelt wird. Die Durchgangsöffnung muß nicht unbedingt eine geschlossenen Durchgangsöffnung sein, es wäre z. B. ebenfalls im Rahmen der Erfindung denkbar, die Durchgangsöffnung in der Art einer etwa halb- oder dreiviertelkreisförmigen Vertiefung von der Oberseite des Schwimmers her auszubilden, durch die dann die Schlauchleitung verlaufen könnte.

In allen Fällen wird zur Anbringung der Schwimmer an der Schlauchleitung die aufwendige, teuere und immer kritische Montagestelle "Schlauchschelle" vermieden. Die Schwimmer lassen sich in der Form von Formteilen äußerst einfach, beispielsweise aus Kunststoff gießen oder blasen, wobei die Formteile dann hermetisch abgeschlossen sind und durch entsprechende Gestaltung als Auftriebskörper dienen. Dies bedeutet Senkung der Herstellungskosten und gestattet eine fast beliebig optimierbare äußere Form des gesamten Schwimmers.

In vorteilhafter Ausgestaltung der Erfindung ist vorgesehen, daß als Formteile für die Schwimmer zwei miteinander verbindbare hohle Kunststoffhalbschalen vorgesehen sind. Als Kunststoff kommt insbesondere ein solcher Kunststoff in Frage, der eine ausreichende UV-Strahlen-, Hitze- und Wasserbeständigkeit aufweist und daher z. B. für den rauhen Betrieb in Kläranlagen besonders geeignet ist. Durch die Verwendung von zwei Formteilen wird darüber hinaus noch der Vorteil erreicht, daß eine doppelte Sicherheit erhalten wird, weil dann, wenn ein Formteil Leck schlägt, das andere immer noch die Tragfunktion übernehmen kann. Als Kunststoff für die Herstellung der Schwimmer kommt z.B. PE (Polyäthylen) in Frage.

In weiterer vorteilhafter Ausgestaltung der Erfindung ist vorgesehen, daß die Formteile miteinander verrastbar sind. Die Verrastbarkeit erleichtert nicht nur die Montage der Formteile und damit der Schwimmer an der Schlauchleitung, sie gestattet es dann auch eventuell die Schwimmer wieder abzumontieren, in einfacher Weise defekte Schwimmer auszutauschen und die Schwimmer an beliebigen Stellen neu anzuordnen.

Eine weitere Vereinfachung ergibt sich dann, wenn die Formteile eine gemeinsame, in Verlaufsrichtung der Luftversorgungsleitung sich erstreckende Biegekante aufweisen, die die Formteile permanent miteinander verbindet. Eine solche Biegekante hat den Vorteil, daß sie die Formteile in der geeigneten Zuordnung zueinander hält, so daß die Anordnung der Formteile um die Luftversorgungsleitung herum und das entsprechende Zusammenfügen noch weiter vereinfacht wird. Die Biegekante kann beispielsweise die Form eines Steges haben, der die beiden Formhälften miteinander verbindet. Die Schwimmer können dann einfach um den Versorgungsschlauch herum zusammengeklappt werden, wobei die Zuordnung im Falle einer Verrastung der zu verhaftenden Elemente automatisch erreicht wird. Wie bereits oben erwähnt, ist es aber auch denkbar, die beiden Formteile permanent miteinander zu verbinden, so daß dann die Anbringung der Schwimmer dadurch geschieht, daß diese auf die Schlauchleitung aufgefädelt werden.

In weiterer Ausgestaltung der Erfindung weist der Schwimmer wenigstens eine Aufnahmeöffnung für die Aufnahme von der Schlauchleitung abzweigende Luftabzweigstutzen auf. Diese Luftabzweigstutzen können bei einer aus Gummimaterial bestehenden Luftversorgungsleitung dort in bestimmten, beliebigen Abständen angebracht werden und schaffen die Anschlußstelle zwischen der zu den Bodenbelüftern führenden Verbindungsleitung und der Luft versorgungsleitung. Wenn wie angegeben, der Schwimmer nun Aufnahmeöffnungen für diese Luftabzweigstützen aufweist, so ergibt sich die Möglichkeit, die Aufnahmeöffnung so an den Durchmesser des Luftabzweigstutzens anzupassen, daß mindestens in vertikaler Richtung nach unten eine kraftschlüssige Verbindung zwischen Verbindungsleitung und Schwimmer zustande kommt. Mit dieser kraftschlüssigen Verbindung wird erreicht, daß die Zugkräfte, die durch das Gewicht des Bodenbelüfters an der Verbindungsstelle zwischen der Luftversorgungsleitung und dem Abzweigstutzen auftreten, direkt in den Schwimmer eingeleitet werden, so daß kein Zug an die erwähnte Anschlußstelle gelangt und ein Ausreißen des Luftabzweigstutzens, der in der Art eines Fahrradventils an der Schlauchleitung angeordnet sein kann, nicht auftreten kann. In Längsrichtung des Schlauches kann die Aufnahmeöffnung ovalverlaufend ausgebildet sein, so daß in dieser Richtung der Luftabzweigstutzen etwas Spiel in der Aufnahmeöffnung hat.

Die Verbindung zwischen dem Luftabzweigstutzen und der Verbindungsleitung kann zwar über Schlauchschellen durchgeführt werden, vorteilhafter sind jedoch Schnellverschlüsse, weil hier zum einen die Montage erleichtert wird, zum anderen die Verleztungsgefahr für den Monteur nicht besteht.

In einer weiteren sehr vorteilhaften Ausgestaltung der Erfindung ist vorgesehen, daß der Schwimmer mit einem in das Gewässer hineinragenden, in Richtung der Schlauchleitung verlaufenden Schwert versehen ist. Es hat sich herausgestellt, daß eine solche Schwimmerausgestaltung ganz bedeutende Vorteile für den Antrieb der Schwimmbelüfter mit sich bringt. Großtechnische Versuche zeigten, daß sich durch diese Maßnahme auch dann noch eine Wanderbewegung der Belüfterkette aufrechterhalten läßt, wenn mit wesentlich geringerer Luftbeaufschlagung als bisher gearbeitet wird. Die so ausgebildeten Schwimmer zeigen eine wesentlich bessere Energieabnahme sowohl aus der vertikalen Wasserströmungsbewegung als auch aus der horizontalen Wasserströmung. Im durchmischten Bereich, d.h. in belüfteten Teilen des Beckens oder im gesamten Becken, in dem die Luft eingetragen wird, kann die vertikale Wassergeschwindigkeit bedeutende reduziert werden, beispielsweise auf 0,1 bis 0,2m/s, ohne daß die Wanderbewegung verloren geht. Während normal bei einer feinblasigen Lufteinleitung ca. 0,7m/s an vertikaler Wassergeschwindigkeit gemessen wurde, kann durch diese nun minimierte vertikale Wassergeschwindigkeit auch die Verweilzeit einer aus den Bodenbelüftern austretenden Luftblase im Wasser erheblich länger werden, da die Verweilzeit der Blase im Wasser im hohen Maße neben ihrer Eigengeschwindigkeit von ca. 0,3m/s von der diese überlagernde vertikale Aufströmungsgeschwindigkeit des Wassers die im erfindungsgemäßen Teil nur 0,2m/s betragen kann, bestimmt wird. Dadurch bleiben die Blasen länger im Wasser, weil sie nicht durch eine vertikale Wasserströmung in vertikaler Richtung unnötig beschleunigt werden. In die Stoffübergangsgleichung des Sauerstoffs in das Wasser geht die Verweilzeit als entscheidende Größe liniar ein.

Die Schwertausbildung an den Schwimmern hat außerdem den Vorteil, daß die Schwimmer eine bessere Energieabnahme aus der Horizontalströmung zeigen, so daß deutlich weniger Horizontalenergie für die "Vermischung" bzw. den Wassertrasnport durch das Gesamtbecken übrigbleibt und somit die Durchwanderung des Wassers durch ein Abwasserbecken deutlich verlangsamt ist. Dies wiederum hat den Vorteil, daß man in dem Becken, wie an sich bekannt, mit Zonen unterschiedlich intensiver Belüftung noch deutlicher eine Trennung zwischen diesen einzelnen Zonen ausbilden kann. Es werden dann Sonderprozeßführungen, wie beispielsweise eine Denitrifikation oder dergleichen noch besser möglich.

Desweiteren hat die Schwertausbildung den Vorteil, daß ein eindeutiges Umkehren der Schwimmer bzw. der Schwimmbelüfter bzw. der gesamten Belüfterkette an den Stellen maximaler Amplitude stattfindet, weil durch die an den Schwimmern hängenden Bodenbelüfter an der Stelle der maximalen Auslenkung die Schwimmer in Umfangsrichtung um den Schlauch gedreht werden, wobei sich das Schwert dann entsprechend verschwenkt und bei der Rückbewegung wiederum eine eindeutige Lage einnimmt. Auch teilt das keilförmige Schwert die Vertikalströmung eindeutig und verhindert das Stehenbleiben der Schwimmer. All dies hat zur Folge, daß die Wanderbewegung der Ketten auch bei sehr geringer Luftbeaufschlagung sicher und zuverläßig erfolgen kann und jeder Teil des Beckens gleichmäßig mit Luft versorgt werden kann, wenn dies gewünscht ist. Es treten insbesondere keine Schlängelbewegungen auf, bei denen ganze Bereiche zeitweilig oder immer nicht überstrichen werden würden, so daß es z.B. nirgends zu "Schlammablagerungen" kommen kann. Bei den Belüfterketten nach dem Stand der Technik konnte in manchen Fällen ein Schlängeln der Kette beobachtet werden, was nun mit den erfindungsgemäßen Schwimmern nicht mehr beobachtet wird. Bei der erfindungsgemäßen Ausgestaltung führen die Ketten deutlich eine hin- und hergehende Schwingbewegung in der Art der Grundmode einer Saitenschwingung aus.

Die eindeutige Wanderbewegung bewirkt außerdem, daß sich keine örtliche Vertikalwasserströmung ausbilden kann, die dann die Blasen in ungünstiger Weise schnell nach oben treiben würde. Das ständige Wegwandern des die vertikale Wasserströmung verursachenden Bodenbelüfters minimiert diesselbe.

Wenn der Schwimmer so geformt ist, daß das Metazentrum bezüglich der Eintauchrichtung oberhalb des Schwerpunktes liegt, so ergibt sich eine eindeutige Stellung des Schwertes.

Wenn der Schwimmer vom Schwert aus horizontal in einem im Querschnitt ovalen, liegenden, im wesentlichen auf der Wasseroberfläche schwimmenden Teil übergeht, bringt das den Vorteil mit sich, daß die Schwimmerlage aufgrund dieser besonderen Ausgestaltung besonders stabil, beispielsweise im Vergleich zu einem kreisrunden Querschnitt, ist. Der Schwimmer sitzt dann im wesentlichen mit seiner unteren, in das Schwert übergehenden Fläche auf dem Wasser auf und erfährt bereits bei kleinen Schwenkbewegungen auf der Eintauchseite einen beträchtlichen Auftrieb aufgrund der rasch ansteigenden Verdrängung, was letztlich zu einer besonders stabilisierenden Wirkung führt. Das Verhältnis des oberen Teils des Schwimmers, also desjenigen Teils, der überhalb der Wasserlinie sichtbar ist, und des unterhalb der Wasserlinie sich befindenden Teils des Schwimmers kann vorteilhaft zwischen 1:2 und 1:5 betragen. Mit anderen Worten bedeutet dies, daß der Schwimmer relativ weit in das Wasser eintaucht und dadurch Kräfte aus den Horizontal- und Vertikalströmungen gut aufnehmen und in eine Wanderbewegung der gesamten Belüfterkette übertragen kann. Die horizontale Ausdehnung des ovalen Teils des Schwimmers kann ungefähr der gesamten Höhe des Schwimmers entsprechen.

Um die Schwimmer in der Luftversorgungsleitung anzuordnen, kann zusätzlich zu Rastelementen oder auch zu Verschraubungen noch eine oder mehrere um den Umfang des Schwimmers gelegte Rohrschelle oder dgl. vorhanden sein, die durch eine Aussparung im Schwert des Schwimmers hindurch verläuft. Schließlich können die Formteile des Schwimmers, die als Auftriebskörper wirken und deshalb gegen Eindringen von Wasser abgedichtet sind, mit einer nicht mit dem Wasser in Berührung kommenden, beispielsweise in der Art eines Schlitzes an der Oberseite des Schwimmers verwirklichten Luftdruckausgleichsöffnung versehen sein, die den Zweck hat, daß beispielsweise im Sommerbetrieb bei übermäßiger Aufheizung der Schwimmer die Luft aus den Formteilen entweichen kann, um ein Zerplatzen dieser Teile zu vermeiden.

Die Erfindung wird nun im folgenden anhand der Zeichnung weiter erläutert und beschrieben. Dabei zeigt:
- Fig. 1: eine Prinzipskizze eines Abwasserbeckens, in dem die erfindungemäßen Schwimmbelüfter angeordnet sind;
- Fig. 2: einen zusammengebauten, an der Luftversorgungsleitung angebrachten Schwimmer.
- Fig. 3: eine entlang der Linie II-II der Fig. 2 geschnittene, perspektivischen Ansicht einer Formhälfte eines erfindungsgemäß ausgebildeten Schwimmers sowie einen Teil der Schlauchleitung mit eingesetztem Luftabzweigstutzen;
- Fig. 4: eine Erläuterung des Umkehrvorgangs einer Schwimmbelüfterkette in zeitlicher Abfolge.

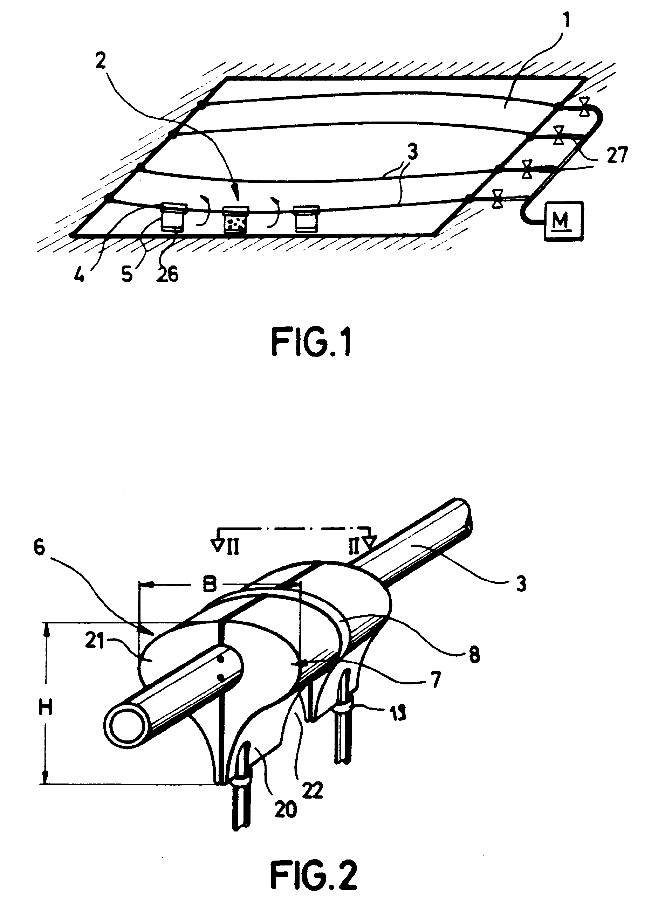

Anhand der Fig. 1 soll zunächst der grundsätzliche Aufbau einer Anlage mit erfindungsgemäßen Schwimmbelüftern erläutert werden. In dieser Fig. bezeichnet 1 z.b.ein Abwasserbecken, in das zu reinigendes Abwasser in nicht näher dargestellter Weise eingeleitet worden ist. Dieses Abwasser soll durch Sauerstoffeintrag biologisch gereinigt werden. Hierhzu sind in an sich bekannter Weise Schwimmbelüfter derart über das Becken geführt, daß sie über eine gewisse Breite auf der Oberläche des Abwassers eine hin- und herwandernde Bewegung ausführen können. Dies ist in der Fig. 1 durch den schwingenden Verlauf der Schwimmbelüfter dargestellt. In dieser Anmeldung werden unter Schwimmbelüfter sowohl die von einer Seite zur anderen Seite des Beckens verlaufenden Schlauchleitungen 3 verstanden, als auch die an diesen Schlauchleitungen in Abständen angeordneten Schwimmer 4, sowie die an den Schlauchleitungen angeordneten Verbindungsleitungen 5 und die Bodenbelüfter 26.

Die Bodenbelüfter 26 sind an sich bekannte Keramikerzen oder dgl., die z.B.mit Gewichten beschwert hängend an der Verbindungsleitung angeordnet sind. über die Verbindungsleitung 5 wird die durch die Luftversorgungsleitung 3 eingespeiste Luft zu den Bodenbelüftern geleitet und von diesen dann feinblasig in das Wasser abgegeben, wobei der Lufteintrag unmittelbar über dem Beckenboden z. B. im Abstand von 5 bis 30 cm, erfolt. Durch den Lufteintrag stellt sich in einem solchen Abwasserbecken eine hin- und hergehende Schwingbewegung der Schwimmbelüftung ein, wodurch auch die Bodenbelüfter in einer schwingenden Bewegung in Bodennähe den wesentlichen teil des Beckenbodens überstreichen und somit gleichmäßig an gewünschten Stellen Luft eintragen und das Wasser lokal umwälzen, ohne daß ein gesonderter Antrieb der Schwimmbelüfter erforderlich wäre. Durch das überstreichen des Beckenbodens mit diesen Schwimmbelüftern wird sich eventuell ablagernder Schlamm wieder angehoben, so daß es nicht zum Absterben des Schlamms am Beckenboden kommen kann.

In der Zeichnung sind Drosselventile 27 dargestellt, die es ermöglichen, die Luftzuführung zu den einzelnen Schwimmbelüftern individuell einzustellen, so daß in dem Becken Zonen starker, Zonen schwächerer oder überhaupt Zonen ohne Belüftung gezielt erzeugt werden können. Dies erlaubt, wie an sich bekannt, Sonderprozeßführungen, z. B. Denitrifizierung oder dgl.

Es versteht sich, daß die in Fig. 1 gezeigten Schwimmer sowie die Verbindungsleitungen 5 und die Bodenbelüfter 6 selbstverständlich an allen gezeigten Luftversorgungsleitungen angeordnet sind. Aus Gründen der Einfachheit sind in der Fig. 1 lediglich drei solcher Einheiten dargestellt. Wenn ein solches Becken als Belebtschlammbecken betrieben wird, dann befindet sich in dem Becken außerdem noch eine Beruhigungszone am Abwasserablauf. Desweiteren können dort noch Schlammsammelrinnen angeordnet sein, wie dies in früheren Anmeldungen desselben Anmelders beschrieben worden ist.

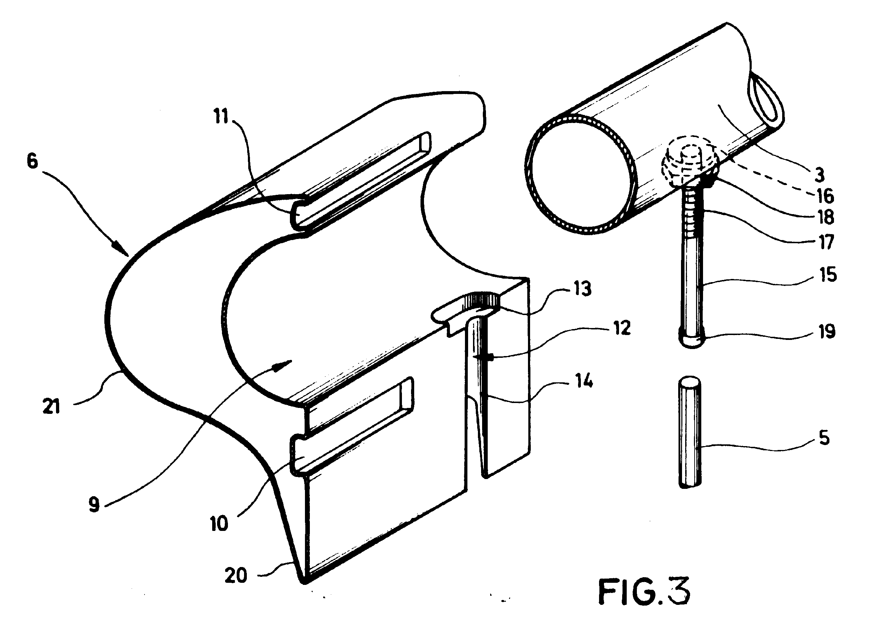

Die Luftversorgungsleitungen 3 sind nun erfindungsgemäß als durchgehende Schlauchleitungen ausgebildet. An diesen durchgehenden Schlauchleitungen 3 können die Schwimmer seitlich aufgesetzt sein. Es ist aber auch denkbar, den Schlauch durch eine vorhandene Öffnung in den Schwimmern hindurchzufädeln. Die Schwimmer sind bei bei dem in Fig. 2 und 3 dargestellten Ausführungsbeispiel als auftriebskörperbildende Formteile 6 und 7 ausgebildet, die eine Durchgansöffnung 9 für die Schlauchleitung 3 bilden und über anhand der Fig. 3 noch näher zu erläuternde Rastelemente mit einander verbunden sind. Zusätzlich kann auch ein Halteband 8 in der Art einer Schlauchschelle oder dgl. die beiden Formteile 6 und 7 zusammenhalten.

Anhand der Fig. 3 ist der Aufbau eines bevorzugten Schwimmers anhand eines von zwei hierfür vorgesehenen Formteilen aus den Formteilen deutlich zu erkennen. Das dargestellte Formteil 6 ist aus Kunststoff (PE) hergestellt und korrespondiert mit einem nicht dargestellten zweiten Formteil 7, um so den in Fig. 2 zu erkennenden Schwimmer zu bilden. Entlang der in dem Formteil 6 gebildeten Durchgangsöffnung 9 verlaufen oberhalb und unterhalb dieser Durchgangsöffnung die Nuten 10 und 11, die zur Aufnahme korrespondierend ausgebildeter, nicht dargestellter Vorsprünge an dem anderen Formteil dienen. Die Kontruktion der Nuten 10 und 11 ist so, daß bei Andrücken der korrespondierend ausgebildeten Vorsprünge in einem anderen Formteil ein Verrasten der beiden Teile miteinander erfolgt. Zumindest die untere Nut 10 läuft nicht über die gesamte Länge des Formteils, sondern endet auf beiden Seiten vor dem Ende des Formteils.

Zwischen dem Ende der Nut 10 und dem Ende des Formteils ist zur Hälfte eine in Verlaufsrichtung des Schwimmers ovale Aufnahmeöffnung 12 ausgebildet, die aus einem vom Umfang der Durchgangsöffnung 9 nach unten gesehen erweiterten Bereich 13 und einem sich daran anschließenden, im Querschnitt halbkreisförmigen Abschnitt 14 gebildet ist. Es versteht sich, daß an dem korrespondierenden, zweiten Formteil eine entsprechende Ausgestaltung vorhanden ist, so daß nach dem Zusammenfügen der beiden Formteile eine im oberen Bereich ovale und im Abschnitt 14 dann kreisrunde Aufnahmeöffnung entsteht. Durch diese Aufnahmeöffnung hindurch verläuft in befestigten Zustand der Luftabzweigstutzen 15. Der Luftabzweigstutzen besitzt am schlauchseitigen Ende einen Kragen 16, mit dem er durch die Schlauchwand hindurch in eine dort herauszuschneidende entsprechende Öffnung gesteckt wird und sich dann mit diesem Kragen von innen an die Schlauchwand anlegt. Über ein Gewinde 17 kann dann eine Mutter 18 aufgeschraubt werden, die sich von außen an die Schlauchwandung anlehnt und bei festem Zuziehen die Schlauchwand fest zwischen dem innenliegenden Kragen 16 und der dem Kragen zugewandten Fläche der Schraube 18 verspannt. Es findet also eine Befestigung in der Art eines Fahrradventils statt, ohne daß jedoch ein zusätzliches Vulkanisieren erforderlich ist.

Es versteht sich, daß diejenigen Stellen, an denen diese Luftabzweigstutzen angeordnet werden sollen, nicht vorher bestimmt werden müssen. Eine solche Montage und auch die Anbringung der Ausschnitte in der Schlauchleitung kann vor Ort jeweils vorgenommen werden. Die Anordnung läßt sich später auch wieder leicht ändern, in dem vorhandene Schlauchöffnungen durch Blindstopfen verschlossen werden. Ein Neuaufbau kann dann an beliebigen anderen Stellen in der geschilderten Weise vorgenommen werden.

Der Luftabzweigstutzen kann aus einem einfach herzustellenden im wesentlichen starren Kunststoffrohr bestehen, das dann durch den Bereich 14 der Aufnahmeöffnung 12 hindurch verläuft, während die Mutter 18 in dem erweiterten Bereich 13 dieser Öffnung zu liegen kommt. Durch die in Verlaufsrichtung des Schwimmers ovale Ausgestaltung der Aufnahmeöffnung besteht ein gewisses Spiel für den Luftabzweigsstutzen in dieser Richtung, jedoch verhindert der übergang von dem erweiterten Bereich 13 in den Abschnitt 14 eine Zugbelastung an der Verbindungsstelle zwischen Schlauch und Abzweigstutzen, weil bei einer vertikalen Zugbelastung des Luftabzweigstutzens die Kraft dann über die Mutter 18 in den Schwimmer eingeleitet und dadurch abgefangen wird. In den anderen Richtungen kann zum Vermeiden sonstiger Kräfte Spiel belassen werden.

Die Länge des Luftabzweigstutzens 15 ist so bemessen, daß sie mit einem Anschlußbereich 19 aus dem Schwimmer unten herausragt, so daß dort dann mittels eines Schnellverschlusses 19 die Verbindungsleitung 5 an dem Luftabzweigstutzen 15 in an sich bekannter Art und Weise befestigt werden kann. Jeder Schwimmer weist vorzugsweise zwei derartige Aufnahmeöffnungen für die beschriebenen Luftabzweigstutzen auf, wobei jeder Bodenbelüfter dann über zwei Verbindungsleitungen am Ende jeweils mit einem entsprechend zugeordneten Schwimmer verbunden ist.

Wie Fig. 2 erkennen läßt, besteht der Schwimmer aus einem unteren schwertförmigen Teil, der im folgenden als Schwert 20 bezeichnet wird. An dieses Schwert 20 schließt sich der auf der Oberfläche aufschwimmende Teil 21 an. Dieser Teil 21 hat wie Fig. 3 zeigt, nach dem Zusammenbau der beiden Hälften die Querschnittsform eines Ovals, wobei die Breite B zur Gesamthöhe H des Schwimmers ungefähr im Verhältnis 1:1 steht und der über dem Wasser liegende Teil des Schwimmers bei normaler Gewichtsbelastung zu dem in das Wasser eintauchenden Teil im Verhältnis 1:2 bis 1:5 sein kann.

Durch die Ausbildung des Schwerts an dem Schwimmer und die Ausbildung des ovalen, auf der Wasseroberfläche aufschwimmenden Teils wird eine sehr stabile Schwimmerlage erreicht. Das Metazentrum M des Schwimmers liegt bei einer geeigneten Konstruktion oberhalb des Schwerpunktes S, so daß sich eine eindeutige Schwimmerlage immer automatisch einstellt. Die Ausbildung des Schwerts 20, mit dem der Schwimmer in das Wasser hineinragt, hat zum Ergebnis, daß die Wasserbewegungen, die den Schwimmer und damit auch die Schlauchleitung 3 zur hin- und hergehenden Bewegung veranlassen, schon bei geringeren Wasserbewegungen mit der Wanderbewegung beginnen. Mit anderen Worten heißt dies, daß bereits mit weniger Luft- bzw.
Sauerstoffeintrag und dadurch hervorgerufener geringerer vertikaler und horizontaler Wasserwandergeschwindigkeit sich trotzdem ein zuverlässiger Wanderbetrieb in einer schwingenden Bewegung der Schwimmbelüfterketten aufrechterhalten läßt.

Darüber hinaus bewirkt die Schwertausbildung, daß die die Schwimmbelüfter an den Stellen ihrer maximalen Auslenkung eine eindeutige Umkehrbewegung vollziehen, so daß es nicht zu Stillstand oder Schlängelbewegungen kommt, die die Gefahr in sich bergen, daß Teile des Beckens unbelüftet bleiben.

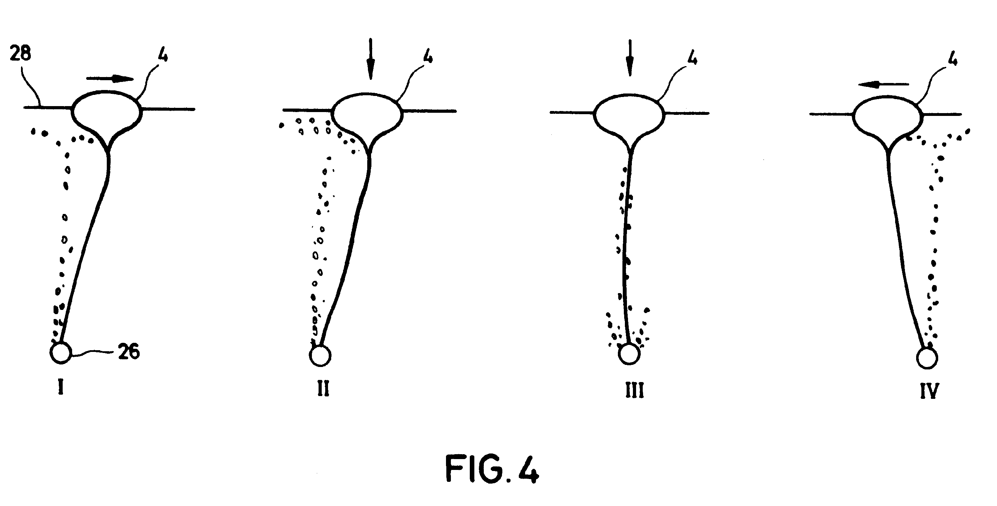

Dieser Umkehrvorgang ist anhand der zeitlichen Abläufe in der Fig. 4 dargestellt. In der Fig. 4 I ist der Vorgang gezeigt, bei dem sich die Kette in Richtung des dort dargestellten Pfeiles bewegt, also noch nicht der Umkehrpunkt erreicht ist. Die Bodenbelüfter eilen bei dieser Schwimmbewegung den in Ruhestellung vertikal darüber angeordneten Schwimmern 4 nach, so daß die durch die aufsteigenden Luftblasen erzeugte Strömung gegen das Schwert abgelenkt wird und diese Bewegung der Schwimmer und damit der gesamten Schwimmbelüfterkette unterstützen bzw. diese Bewegung aufrecht erhalten. Wenn die Kette ihre maximale Auslenkung erreicht hat 4II, kommt der Schwimmer zum Stillstand. Die Luftversorgungsleitung ist in dieser maximal ausgeschwungenen Stellung derart gespannt, daß sich in der Leitung Rückstellkräfte ergeben, die größer als der durch die Wasserströmung auf die Schwimmer erzeugte Druck ist. Der Beginn dieser Stillstandsbewegung ist in der Phase II gezeigt. Da in dieser Phase der Schwimmer nicht mehr weiter in der Zeichnung nach rechts wandern kann, schwingt nun der Bodenbelüfter unter dem Schwert hindurch. Dadurch wird der durch die aufsteigenden Blasen in der Fig. I verursachte Wasserströmungsdruck auf das Schwert in Richtung einer weiteren Auslenkung geringer, so daß es letztlich zu einem Zustand kommen muß, in dem der Bodenbelüfter 26 in der Zeichnung rechts vom Schwert des Schwimmers 4 zu liegen kommt. Ist dieser Zustand einmal erreicht, bewirken die nach wie vor vom Bodenbelüfter aufsteigenden Luftblasen und die dadurch erzeugte Wasserströmung, daß das Schwert nun auf der rechten Seite von der vom Bodenbelüfter verursachten Strömung beaufschlagt wird, was dann ein Zurückwandern des in der Phase IV dargestellten Pfeiles bewirkt. Es findet somit ein definierter und eindeutiger Umkehrvorgang jeweils statt.

Auch bei hoher Luftbeaufschlagung ergeben sich eindeutige Vorteile. Bei herkömmlichen Schwimmbelüftern konnte es geschehen, daß bei zu starker Luftbeaufschlagung die Kette eines in der Art eines Tischtennisballes auf einer Luftdüse zum Stillstand gekommen ist. Dieses Phänomen wurde in Versuchen mit den erfindungsgemäßen Schwimmern nicht mehr beobachtet.

Durch die erfindungsgemäße Schwimmerausbildung wird der Betrieb und die Herstellung, die Montage, die Wartung und Reparatur erfindungsgemäßer Belüfterketten und damit der gesamten Anlage, in der diese Schwimmbelüfter zum Einsatz kommen, bedeutend vereinfacht. So ist es für die Installation lediglich erforderlich, einen entsprechend ausgemessenen, durchgehenden Schlauch als Luftversorgungsleitung 3 mit entsprechenden Luftabzweigstutzen an den Stellen zu versehen, an denen Bodenbelüfter angeschlossen werden sollen. Hierzu müssen in die Schlauchleitungen leiglich Löcher eingeschnitten werden. Dadurch lassen sich jeweils optimal angepaßte Bedingungen erhalten.

Sodann lassen sich die Schwimmer äußerst einfach an den Schlauchleitungen befestigen, indem man die beiden Formhälften seitlich an den geeigneten Stellen ansetzt und passend gegeneinander drückt, so daß die Formteile miteinander verrasten, wie das Fig. 2 in der zusammengebauten Lage zeigt. Es kann dann noch ein zusätzliches Halteband 8 um die beiden Formteile herumgelegt werden. Zur Anordnung des Haltebands kann das Schwert 20 etwa in der Mitte des Schwimmers durch eine entsprechende Aussparung 22 unterbrochen sein, damit sich das Halteband eng um den Umfang, insbesondere im ovalen Teil des Schwimmers herumlegen kann. Nach dieser Montage treten die freien Enden 19 der Luftabzweigstutzen nach unten aus dem Schwert hervor, so daß dann dort ohne große Mühe die Verbindungsleitungen 5 aufgesteckt und mit den entsprechenden Schnellverbindern oder auch Schlauchschellen gesichert werden können.

Nach Montage sämtlicher Schwimmer und nach dem Anschluß der Bodenbelüfter über die Verbindungsleitungen ist die Anlage dann funktionsbereit.

Es versteht sich, daß die Schwimmer nicht aus zwei völlig voneinander separierbaren, auftriebskörperbildenden Formteilen bestehen müssen. Es ist z. B. auch denkbar, entlang der oberen oder unteren Kante der beiden Formteile 6 und 7 im Berührungsbereich eine durchgehende knickfähige Biegekante vorzusehen, die ein Aufklappen der beiden Teile 6 und 7 gegeneinander ermöglicht. Selbstverständlich können auch mehr als nur zwei Formteile derart gestaltet und zusammengebaut werden, daß sie einen Schwimmer 4 bilden. Schließlich wird noch darauf hingewiesen, daß an den Formteilen in nicht näher dargestellter Weise eine Druckausgleichsöffnung vorgesehen sein kann, die bei Temperaturänderungen in den hermetisch abgeschlossenen Formteilen einen Druckausgleich ermöglichen.

## Patentansprüche

1. Schwimmbelüfter für die Einleitung von Luft in ein Gewässer, insbesondere in eine Belebtschlammanlage, mit wenigstens einer an der Wasseroberfläche verlaufenden Luftversorgungsleitung und mit wenigstens einem Bodenbelüfter, der über einen an der Luftversorgungsleitung angeordneten Schwimmer sowie wenigstens eine von der Luftversorgungsleitung abzweigende Verbindungsleitung hängend unterhalb der Wasseroberfläche angeordnet ist und dort Luft in das Gewässer einleitet, **dadurch gekennzeichnet**, daß die Luftversorgungsleitung als durchgehende Schlauchleitung (3) ausgebildet ist und daß der Schwimmer wenigstens zwei Auftriebskörper bildende Formteile (6, 7) umfaßt, die an der Schlauchleitung (3) angeordnet und miteinander verbunden sind und die die Schlauchleitung (3) in einer von dem Formteilen gebildeten Durchgangsöffnung (9) ganz oder teilweise umschließen.

2. Schwimmbelüfter nach Anspruch 1, **dadurch gekennzeichnet**, daß als Formteil (6, 7) für den Schwimmer (4) zwei miteinander verbindbare, hohle, hermetisch abgeschlossene Kunststoffhalbschalen vorgesehen sind.

3. Schwimmbelüfter nach Anspruch 1 oder 2, **dadurch gekennzeichnet**, daß die Formteile (6, 7) miteinander verrastbar sind.

4. Schwimmbelüfter nach wenigstens einem der vorangegangenen Ansprüche, **dadurch gekennzeichnet**, daß die Formteile (6, 7) eine gemeinsame, entlang der Luftversorgungsleitung verlaufende Biegekante aufweisen, die die Formteile permanent miteinander verbindet.

5. Schwimmbelüfter nach wenigstens einem der vorangegangenen Ansprüche, **dadurch gekennzeichnet**, daß der Schwimmer (4) wenigstens eine Aufnahmeöffnung (12) für die Aufnahme von von der Schlauchleitung (3) abstehenden Luftabzweigstutzen (15) aufweist.

6. Schwimmbelüfter nach Anspruch 5, **dadurch gekennzeichnet**, daß der Durchmesser der Aufnahmeöffnung (12) so an den Durchmesser des Luftabzweigstutzens (15) angepaßt ist, daß bei einer Krafteinleitung in vertikaler Richtung nach unten (Zug) eine kraftübertragende Verbindung zwischen dem Luftabzweigstutzen und dem Schwimmer (4) zustandekommt.

7. Schwimmbelüfter nach Anspruch 5 und 6, **dadurch gekennzeichnet**, daß die Verbindungsleitung (5) an den Luftabzweigstutzen mittels einer Schlauchschelle verbunden ist.

8. Schwimmbelüfter nach Anspruch 5 oder 6, **dadurch gekennzeichnet**, daß die Verbindungsleitung (5) an dem Luftabzweigstutzen (15) mittels eines Schnellverschlusses angeschlossen ist.

9. Schwimmbelüfter nach wenigstens einem der vorangegangen Ansprüche, **dadurch gekennzeichnet**, daß der Schwimmer (4) mit einem in das Gewässer hineinragenden, in Richtung der Schlauchleitung (3) verlaufenden Schwert (20) versehen ist.

10. Schwimmbelüfter nach wenigstens einem der vorangegangen Ansprüche, **dadurch gekennzeichnet**, daß der Schwimmer (4) so geformt ist, daß das Metazentrum (M) bezüglich der Eintauchrichtung oberhalb des Schwerpunkts (S) liegt.

11. Schwimmbelüfter nach Anspruch 9, **dadurch gekennzeicht**, daß der Schwimmer (4) von seinem Schwert (20) aus in einem im Querschnitt horizontal liegenden ovalen, im wesentlichen auf der Wasseroberfläche schwimmenden Teil (21) übergeht.

12. Schwimmbelüfter nach Anspruch 11, **dadurch gekennzeichnet**, daß das Höhenverhältnis des bei normaler Gewichtsbelastung des Schwimmers oberhalb des Wassers sich befindenden Teils zu dem unterhalb des Wassers sich befindenden Teils einschließlich des Schwerts in der Größenordnung von 1:2 bis 1:5 beträgt.

13. Schwimmbelüfter nach wenigstens einem der vorangegangen Ansprüchen, **dadurch gekennzeichnet**, daß in dem Schwert (20) wenigstens eine Aussparung (22) vorgesehen ist, durch die ein Halteelement (8) zum Zusammenhalt der Formteile hindurch verläuft.

14. Schwimmbelüfter nach wenigstens einem der vorangegangen Ansprüchen, **dadurch gekennzeichnet**, daß die Hohlkörper mit Schaumstoff ausgeschäumt sind.

## Claims

1. Floating aerator for introducing air into a body of water, especially into an activated-sludge installation, with at least one air-supply line extending on the water surface and with at least one bottom aerator which, via a float arranged on the air-supply line and via at least one connecting line branching off from the air-supply line, is arranged suspended below the water surface and introduces air into the body of water there, characterised in that the air-supply line is designed as a continuous hose line (3), and in that the float comprises at least two mouldings (6, 7) which form buoyancy bodies and which are arranged on the hose line (3) and are connected to one another and which enclose the hose line (3) completely or partially in a passage orifice (9) formed by the mouldings.

2. Floating aerator according to Claim 1, characterised in that two hollow hermetically closed-off plastic half-shells which can be connected to one another are provided as a moulding (6, 7) for the float (4).

3. Floating aerator according to Claim 1 or 2, characterised in that the mouldings (6, 7) can be interlocked.

4. Floating aerator according to at least one of the preceding claims, characterised in that the mouldings (6, 7) have a common bending edge which extends along the air-supply line and which connects the mouldings permanently to one another.

5. Floating aerator according to at least one of the preceding claims, characterised in that the float (4) has at least one receiving orifice (12) for receiving air branch connection pieces (15) projecting from the hose line (3).

6. Floating aerator according to Claim 5, characterised in that the diameter of the receiving orifice (12) is adapted to the diameter of the air branch connection piece (15) in such a way that, when force is introduced downwards in a vertical direction (pull), a force-transmitting connection is made between the air branch connection piece and the float (4).

7. Floating aerator according to Claims 5 and 6, characterised in that the connecting line (5) is connected to the air branch connection piece by means of a hose clip.

8. Floating aerator according to Claim 5 or 6, characterised in that the connecting line (5) is connected to the air branch connection piece (15) by means of a quick-action fastening.

9. Floating aerator according to at least one of the preceding claims, characterised in that the float (4) is provided with a fin (20) projecting into the body of water and extending in the direction of the hose line (3).

10. Floating aerator according to at least one of the preceding claims, characterised in that the float (4) is shaped in such a way that the metacentre (M) is located above the centre of gravity (S) in relation to the direction of immersion.

11. Floating aerator according to Claim 9, characterised in that the float (4) merges from its fin (20) into an oval part (21) which is horizontal in cross-section and which floats essentially on the water surface.

12. Floating aerator according to Claim 11, characterised in that the height ratio of the part located above the water when the float is under a normal weight load to the part, including the fin, located under the water is of the order of 1:2 to 1:5.

13. Floating aerator according to at least one of the preceding claims, characterised in that there is provided in the fin (20) at least one clearance (22), through which runs a retaining element (8) for holding the mouldings together.

14. Floating aerator according to at least one of the preceding claims, characterised in that the hollow bodies are filled with foam.

## Revendications

1. Aérateur flottant pour l'introduction d'air dans de l'eau, notamment dans des installations à boues activées, comportant au moins une conduite d'alimentation d'air s'étendant à la surface de l'eau, et comportant au moins un aérateur de fond, qui est disposé sous la surface de l'eau où il injecte de l'air dans l'eau, en étant suspendu par l'intermédiaire d'un flotteur monté sur la conduite d'alimentation en air et d'au moins une conduite de liaison en dérivation de la conduite d'alimentation en air, caractérisé en ce que la conduite d'alimentation en air est réalisée en tant que conduite continue en tuyau flexible (3), et en ce que le flotteur comprend au moins deux pièces de forme (6, 7) formant des corps flottants, qui sont disposées sur le tuyau flexible (3), sont reliées l'une à l'autre, et enserrent totalement ou partiellement la conduite en tuyau flexible (3) par une ouverture de passage (9) formée par les pièces de forme.

2. Aérateur flottant selon la revendication 1, caractérisé en ce qu'en guise de pièces de forme (6, 7) pour le flotteur (4), sont prévues deux demi-coques en matière plastique, fermées hermétiquement, creuses et susceptibles d'être reliées l'une à l'autre.

3. Aérateur flottant selon la revendication 1 ou 2, caractérisé en ce que les pièces de forme (6, 7) peuvent être encliquetées l'une sur l'autre.

4. Aérateur flottant selon l'une au moins des revendications précédentes, caractérisé en ce que les pièces de forme (6, 7) présentent une ligne de pliage commune s'étendant le long de la conduite d'alimentation en air, et reliant l'une à l'autre les pièces de forme, de manière permanente.

5. Aérateur flottant selon l'une au moins des revendications précédentes, caractérisé en ce que le flotteur (4) comporte au moins une ouverture de réception (12) destinée à recevoir des piquages de dérivation d'air (15) faisant saillie de la conduite en tuyau flexible (3).

6. Aérateur flottant selon la revendication 5, caractérisé en ce que le diamètre de l'ouverture de réception (12) est adapté au diamètre du piquage de dérivation d'air (15), d'une manière telle, que lorsqu'une force est exercée dans la direction verticale, vers le bas (traction), il s'établisse une liaison de transmission des efforts, entre le piquage de dérivation d'air et le flotteur (4).

7. Aérateur flottant selon les revendications 5 et 6, caractérisé en ce que la conduite de liaison (5) est reliée au piquage de dérivation d'air, au moyen d'un collier pour tuyau.

8. Aérateur flottant selon la revendication 5 ou 6, caractérisé en ce que la conduite de liaison (5) est raccordée au piquage de dérivation d'air (15), au moyen d'un raccord rapide.

9. Aérateur flottant selon l'une au moins des revendications précédentes, caractérisé en ce que le flotteur (4) est pourvu d'une dérive (20) plongeant dans l'eau et s'étendant dans la direction de la conduite en tuyau flexible (3).

10. Aérateur flottant selon l'une au moins des revendications précédentes, caractérisé en ce que le flotteur (4) présente une forme telle, que le métacentre (M) se situe au-dessus du centre de gravité (S) en se référant à la direction de plongée.

11. Aérateur flottant selon la revendication 9, caractérisé en ce que le flotteur (4), à partir de sa dérive (20), se transforme en une partie (21) de section transversale ovale reposant à l'horizontale et flottant sensiblement à la surface de l'eau.

12. Aérateur flottant selon la revendication 11, caractérisé en ce que dans le cas d'une charge normale sur le flotteur, le rapport de la hauteur de la partie du flotteur située au-dessus de l'eau à la hauteur de la partie se trouvant sous l'eau, y compris la dérive, présente un ordre de grandeur de 1/2 à 1/5.

13. Aérateur flottant selon l'une au moins des revendications précédentes, caractérisé en ce que dans la dérive (20) est prévu au moins un évidement (22), au travers duquel passe un élément de maintien (8) pour maintenir assemblées les pièces de forme.

14. Aérateur flottant selon l'une au moins des revendications précédentes, caractérisé en ce que les corps creux sont remplis de mousse.
